Europäisches Patentamt

European Patent Office

Office européen des brevets

(19)

(11) Veröffentlichungsnummer: **0 200 905 B1**

## (12) EUROPÄISCHE PATENTSCHRIFT

(45) Veröffentlichungstag der Patentschrift: **20.02.91**

(51) Int. Cl.⁵: **G11B 15/675**

(21) Anmeldenummer: **86104167.1**

(22) Anmeldetag: **26.03.86**

(54) **Vorrichtung zur Halterung einer Videokassette.**

(30) Priorität: **09.05.85 DE 3516677**

(43) Veröffentlichungstag der Anmeldung:
**12.11.86 Patentblatt 86/46**

(45) Bekanntmachung des Hinweises auf die
Patenterteilung:
**20.02.91 Patentblatt 91/08**

(84) Benannte Vertragsstaaten:
**DE FR GB IT**

(56) Entgegenhaltungen:
DE-A- 2 551 725     DE-A- 3 007 179
FR-A- 2 357 977     FR-A- 2 463 968
US-A- 3 752 488     US-A- 3 807 653
US-A- 3 904 149     US-A- 3 950 787

(73) Patentinhaber: **GRUNDIG E.M.V. Elektro-
Mechanische Versuchsanstalt Max Grundig
holländ. Stiftung & Co. KG.
Kurgartenstrasse 37
D-8510 Fürth/Bay.(DE)**

(72) Erfinder: **Bratenstein, Ernst
Taubenweg 26
D-8510 Fuerth(DE)**

## Beschreibung

Es sind verschiedenartig ausgeführte Einrichtungen bekannt, um eine Videokassette in eine Betriebsstellung innerhalb eines Video-Magnetbandgerätes zu bringen. Die Kassette wird hierbei von Hand direkt oder über einen Schlitten in die erforderliche Betriebsstellung in das Innere des Gerätes eingeführt. Die Kassette muß hierbei auf die Spulenantriebsdorne zum Antreiben der Bandwickelspulen aufgesteckt werden. Hierzu ist erforderlich, daß eine bestimmte Andruckkraft auf die Kassette einwirkt, um zu gewährleisten, daß die Kassette nicht durch vorhandene Gegenkräfte von der eingenommenen Betriebslage abgehoben wird. Als Gegenkräfte sind die Federungskräfte der Spulen in Form von auf die Spulen einwirkende Druckfedern anzusehen, ferner die Kraft, die zum Aufheben der Spulenverriegelung erforderlich ist, sowie die Vorspannkräfte die zur Positionierung des Kasetteneinlegeschlittens auf den Schlitten einwirken. Diese genannten Kräfte sind jedoch nur im untersten Bereich des Schlittens zu überwinden, sie müssen jedoch über das Steuergetriebe und somit durch den Antriebsmotor, der zur Bewegung des Kassettenschlittens vorgesehen ist, aufgebracht werden. Die Auslegung des Schlitten-Antriebsmotors für diesen nur kurzzeitig erforderlichen Leistungsbedarf verteuert den Antriebsmotor und erfordert ein aufwendiges Steuergetriebe und eine aufwendige Schlittenführung im Gerät. Der Antriebsmotor, das Steuergetriebe und die Schlittenführung könnten jedoch nur zur Erfüllung der eigentlichen Einlegefunktion der Kassette in das Gerät schwächer dimensioniert und somit kostengünstiger ausgeführt sein.

Eine von Hand rein mechanisch zu betätigende Kassetteneinführ-Lösung ist aus der DE-OS 25 51 725 bekannt. Darin wird ein beweglicher, eine Kassette aufnehmender Schlitten beschrieben, der eine obere, zum Einlegen und Entnehmem der Kassette und eine untere, Aufnahme und Wiedergabe ermöglichende Stellung innerhalb eines festen Rahmens einnehmen kann. Zur Erreichung der unteren bzw. oberen Stellung des beweglichen Schlittens dienen je zwei beidseitig des Schlittens eingebrachte rechtwinkelig verlaufende Nuten, in die je zwei rahmenseitig feste Bolzen eingreifen.

Federanordnungen, bestehend aus zwei Seitengabeln mit Gabelöffnungen, in denen schlittenseitige Seitenbolzen geführt sind, mit jeweils zugeordeter Zugfeder, gelagert an dem festen Rahmen, bringen den Schlitten in die jeweils andere Stellung und bewirken eine stabile Lage des beweglichen Schlittens in diesen Stellungen.

Diese rein von Hand zu betätigende Kassetteneinführ-Einrichtung hat den Nachteil, daß die Kassette gegen die Kraft der beschriebenen Federanordnungen eingeschoben werden muß. Erst wenn die Totpunktlage der Federanordnungen überschritten ist, kann die zum Einschieben der Kassette aufzubringende Kraft weggenommen werden und die Kassette wird mit dem beweglichen Schlitten von den Federanordnungen in die untere Stellung bewegt. Die bei dieser rein manuell zu bedienenden Kassetteneinführ-Einrichtung notwendige Kraft, muß bei einem automatischen Einzug der Kassette von einem Schlitten-Antriebsmotor über ein nachgeschaltetes Getriebe aufgebracht werden. Entsprechend der aufzubringenden Arbeit muß der Schlitten-Antriebsmotor demgemäß stark ausgelegt werden.

Aufgabe der Erfindung ist es daher, den erhöhten Kräftebedarf zur Halterung einer Kassette in ihrer Funktionsstellung im Inneren eines Videogerätes nach Absenken in einen Kassettenschacht über eine Zusatzkraft so aufzubringen, daß hierdurch eine Verringerung des Leistungsbedarfs für den Schlitten-Antriebsmotor möglich ist.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1     ist eine vereinfachte perspektivische Darstellung eines Schlittens zur Führung einer Kassette in das Innere eines Kassettenschachtes, wobei dem Schlitten eine Vorrichtung zur Halterung der eingeführten Kassette in ihrer Funktionsstellung zugeordnet ist,

Fig. 2     ist eine vergrößerte Darstellung der Vorrichtung zur Halterung der Kassette vor dem Absenken des Schlittens bzw. der Kassette in den Kassettenschacht und

Fig. 3     ist eine Darstellung der Vorrichtung nach Fig. 2, jedoch nach dem Absenken des Schlittens und somit der Kassette in den Kassettenschacht.

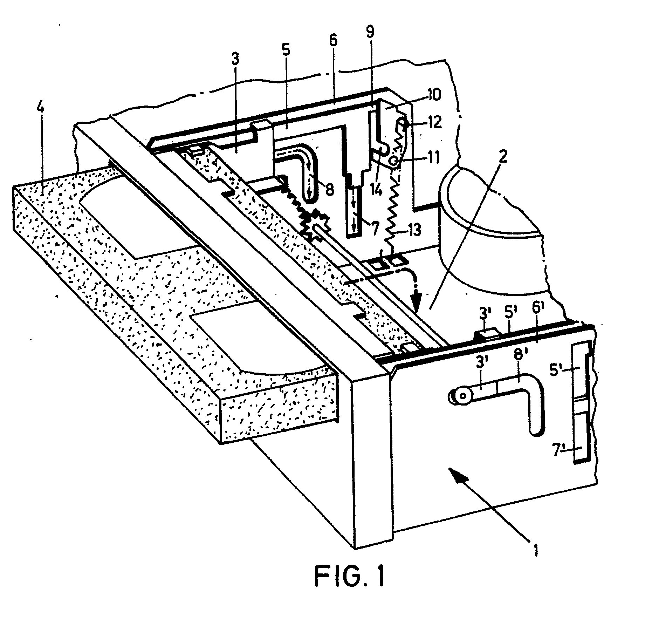

Aus der Figur 1 ist ein nur andeutungsweise gezeichnetes Video-Magnetbandgerät 1 zu erkennen, das einen Kassetten-Einführschacht 2 aufweist, in den mittels eines Schlittens 3 eine Videokassette 4 abgesenkt wird. Die Kassette 4 ist hierbei in einer Geräte-Einlegeposition gezeichnet, in der sie sich kurz vor dem Erfassen durch den Schlitten 3 befindet. Nachdem sie vom Schlitten 3 erfaßt ist, wird die Kassette in das Innere des Gerätes gezogen und anschließend in den Schacht 2 abgesenkt. Der Schlitten 3 ist hierzu längs verschiebbar in Eingriff zu einem Führungsteil 5 gebracht, wobei sich das Führungsteil beidseitig in den hochgezogenen Seitenwänden 6 und 6' des Kassettenschachtes 2 befindet. Das Führungsteil 5 ist durch einen Führungsschlitz 7 in beiden Seitenwänden des Schachtes höhenverschiebbar gelagert. Der Schlitten 3 kann somit durch ein nicht näher dargestelltes Steuergetriebe und Antriebsmotor auf dem Führungsteil 5 gleitend in das Geräteinnere hineinbewegt werden und anschließend mittels des Führungsteils in den Kassettenschacht abgesenkt werden. Die Führung des Schlittens 3 wird noch durch eine zusätzliche Führungsbahn 8, in die der Schlitten über eine Rolle eingreift, unterstützt. An einem Ende weist das Führungsteil 5 eine Nase 9 auf, die sich mit dem Führungsteil senkrecht nach unten in den Kassettenschacht hineinzubewegen vermag. Entlang der Bewegungssenkrechten für die Nase 9 des Führungsteils 5 ist ein Druckhebel 10 beidseitig in der Seitenwand 6 und 6' des Schachtes mittels einer Lagerstelle 11 schwenkbar gelagert. Der Druckhebel 10 ist als ein streifenförmiges Teil aus Kunststoff gefertigt und weist gegenüber seiner Lagerstelle 11 einen Haken 12 auf, in den eine Zugfeder 13 eingehängt ist. Gegenüber der Lager stelle 11 weist der Druckhebel ferner eine Ausnehmung 14 auf, in die beim Absenken des Schlittens 3 die Nase 9 des Führungsteils 5 eingreift. Durch den Eingriff der Nase 9 in die Ausnehmung 14 wird der Druckhebel 10 in Richtung Führungsteil verschwenkt. Die Zugfeder 13 wird hierbei aus ihrer Totpunktlage herausgeschwenkt und wirkt über ein sich am Druckhebel bildendes Drehmoment mit einer erhöhten Druckkraft auf das Führungsteil und somit auf den Schlitten ein. Wird das Führungsteil von seiner unteren Stellung nach oben bewegt, so schwenkt der Druckhebel nach einem kleinen Hub des Führungsteils in seine Ausgangslage zurück,und der Schlitten kann mit geringem Kraftaufwand in seine obere Ausgangslage zurückgeführt werden.

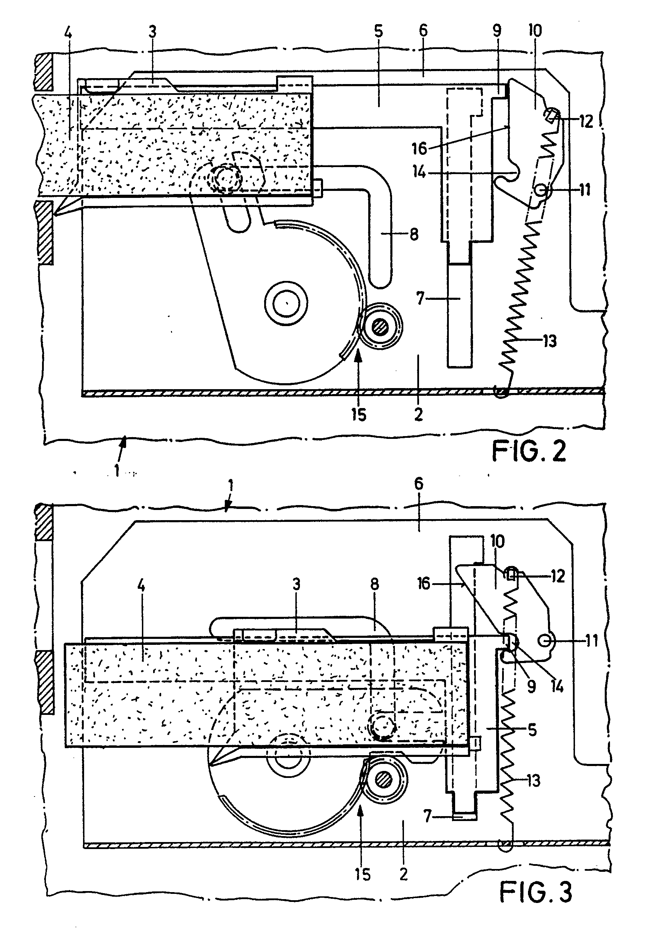

Die Figur 2 zeigt in vergrößerter Darstellung die Ausgangslage des Druckhebels 10, die sich vor dem Einführen der Kassette in das Gerät ergibt. Die Nase 9 des Führungsteils 5 befindet sich hierbei gegenüber einer Gleitfläche 16 des Druckhebels 10 und kann sich ohne jeglichen Gegendruck nach unten bewegen. Der Druckhebel wird durch die auf ihn einwirkende Zugfeder 13 in seiner Ausgangslage an einen Anschlag in der Seitenwand des Schachtes geführt. Andeutungsweise ist in der Figur 2 ein Teil des Steuergetriebes 15 für den Schlitten 3 dargestellt.

In der Figur 3 ist der Druckhebel bei abgesenktem Schlitten 3 in eingeschwenkter Lage zu erkennen. Die Nase 9 des Führungsteils 5 liegt hierbei in der Ausnehmung 14 des Druckhebels 10, und durch die auf den Druckhebel einwirkende Zugfeder 13 wird ein erhöhter Auflagedruck auf den Schlitten 3 ausgeübt.

## Ansprüche

1. Vorrichtung zur Halterung einer Videokassette in einem Kassetten-Aufnahmeschacht eines Video-Magnetbandgerätes, wobei die Kassette an beiden Schmalseiten von einem dem Kassettenschacht zugeordneten und über ein Steuergetriebe beweglich angeordneten Schlitten erfaßt in das Geräte-Innere geführt, und von einer oberen Position in eine untere abgesenkt wird, **dadurch gekennzeichnet,** daß ein unter Federspannung stehender Druckhebel (10) derart in Eingriff zu einem Führungsteil (5) des sich absenkenden Schlittens (3) gebracht wird, daß nur in der unteren Position ein zusätzlicher Druck auf den Schlitten ausgeübt wird.

2. Vorrichtung nach Anspruch 1, **dadurch gekennzeichnet,** daß der Druckhebel (10) ein schmales, streifenförmig aus Kunststoff gefertigtes und beidseitig in der hochgezogenen Seitenwand (6, 6') des Kassettenschachtes (2) drehbar gelagertes Teil ist, daß in Längsrichtung gegenüber der Lagerstelle am Druckhebel eine Zugfeder (13) eingehängt und gegenüber der Lagerstelle (11) eine Ausnehmung (14) vorgesehen ist.

3. Vorrichtung nach Anspruch 1 oder 2, **dadurch gekennzeichnet,** daß das Führungsteil (5) des Schlittens am geräteinneren Ende eine Verlängerung in Form einer Nase (9) aufweist, und daß die Nase bei einer vorgegebenen Lage des Schlittens in die Ausnehmung (14) des Druckhebels (10) im Sinne einer Verzahnung eingreift.

4. Vorrichtung nach einem der bisherigen Ansprüche, **dadurch gekennzeichnet,** daß der Druckhebel (10) an der Seite der Ausnehmung eine für die Nase des Führungsteils am Schlitten anliegende Gleitfläche aufweist.

## Claims

1. Device for holding a video cassette in a cassette-holding well of a magnetic-tape video apparatus, the cassette being grasped at both narrow sides by a slide associated with the cassette well and arranged movably via a control mechanism, guided into the apparatus interior and lowered from an upper position into a lower position, characterized in that a pressure lever (10) under spring tension is brought into engagement with a guiding part (5) of the descending slide (3) in such a way that an additional pressure is exerted on the slide only in the lower position.

2. Device according to Claim 1, characterized in that the pressure lever (10) is a narrow, strip-shaped part manufactured from plastic and rotatably mounted on both sides in the raised side wall (6, 6') of the cassette well (2), in that a tension spring (13) is hooked in on the pressure lever opposite the bearing in the longitudinal direction and a recess (14) is provided opposite the bearing (11).

3. Device according to Claim 1 or 2, characterized in that on the end at the inside of the apparatus, the guiding part (5) of the slide has an extension in the form of a projection (9) and in that, in a predetermined position of the slide, the projection engages in the recess (14) of the pressure lever (10) in the manner of a tooth system.

4. Device according to one of the previous claims, characterized in that, on the side of the recess, the pressure lever (10) has a sliding surface resting against the slide for the projection of the guiding part.

**Revendications**

1. Dispositif de maintien d'une cassette vidéo dans une cage de réception de cassette d'un magnétoscope, la cassette étant introduite, saisie sur ses deux petits côtés par un chariot associé à la cage de cassette et disposé déplaçable au moyen d'un mécanisme de commande, vers l'intérieur de l'appareil et descendue d'une position haute dans une position basse, caractérisé en ce qu'un Levier de pression (10) sollicité par un ressort est amené en prise avec une pièce de guidage (5) du chariot descendant (3) de telle manière qu'une pression supplémentaire soit exercée sur le chariot seulement dans la position basse.

2. Dispositif selon la revendication 1, caractérisé en ce que le levier de pression (10) est une pièce en forme de bande mince, fabriquée en matière plastique et logée d'une façon pivotante des deux côtés de la paroi latérale (6, 6') Je la cage de cassette (2) et que, en direction longitudinale. à l'opposé du point d'articulation, un ressort de traction (13) est accroché au lever de pression, un évidement (14) étant prévu à l'opposé du point d'articulation.

3. Dispositif selon les revendications 1 ou 2, caractérisé en ce que la pièce ce quidage (5) du chariot est pourvue, à son extrémité située à l'intérieur de l'appareil, d'un prolongement en forme de bec (9) et que, dans une position donnée du chariot, le bec s'engage à la manière d'un ergrenage dans l'évidement (14) du levier de pression (10).

4. Dispositif selon l'une des revendications précédentes, caractérisé en ce que le levier de pression (10) présente, du côté de l'évidement, s'appuyant contre le chariot, une surface lisse pour le bec de la pièce de guidage.

FIG. 1

FIG. 2

FIG. 3